# EUROPEAN PATENT SPECIFICATION

(11) **EP 3 472 411 B1**
(45) Date of publication and mention of the grant of the patent: **12.02.2020**
(21) Application number: 17737017.8
(22) Date of filing: 20.06.2017
(51) Int. Cl.: E04H 17/18, E04H 12/22, E02D 29/02, E01F 13/02, H02S 20/30, F24S 25/11, F24S 25/617, E04H 17/22

(54) **ANCHORS**
ANKER
DISPOSITIFS D'ANCRAGE

(30) Priority: 21.06.2016 GB 201610773
(43) Date of publication of application: 24.04.2019
(73) Proprietor: Nexus Eco Holdings Ltd, Manchester, Greater Manchester M35 9BG (GB)
(72) Inventor: FOGG, Lee, Wigan Lancashire WN2 3LH (GB); KIRBY, Clifford, Sefton Village Merseyside L29 6YD (GB)
(74) Representative: Hutchinson, Thomas Owen
(86) International application number: PCT/GB2017/051793
(87) International publication number: WO 2017/220987

(56) References cited:
- WO-A1-2008/017836
- GB-A- 2 530 286
- NL-C- 2 011 437
- US-A1- 2005 063 623
- US-A1- 2010 111 449

## Description

This invention relates to anchors, and in particular, but without limitation, to anchors suitable for use in fencing or other semi-permanent installations, such as solar PV arrays.

Anchors, in the context of the present invention, are bases that rest on a support surface, such as the ground, and which can be used to support a load, such as, but without limitation to, a fence post or another supplementary structure.

Examples of known structures that resemble the invention are described in the following published patent specifications: GB2530286 [BRAMBLE GRANT, 23 March 2016]; NL2011437 [BEEKENKAMP VERPAKKINGEN BV, 16 March 2015]; US2010111449 [NOBLE ROBERT, 6 May 2010]; US2005063623 [EISENBARTH BRADLEY MATTHEW, 24 March 2005]; and WO2008017836 [DUDHIA SAEED, 14 February 2008].

Most fencing systems are modular, that is to say, comprising a series of spaced-apart fence posts that support fence panels. A fence can be used to mark out a boundary or perimeter and/or to prevent or inhibit the passage of people and/or vehicles from one side of the fence to the other. Fences are used, in many cases, in preference to walls or other boundary structures due to their ease and relatively low cost of installation, maintenance and disassembly.

Fence panels come in a variety of forms, such as wooden boards, a series of concrete slats, wire mesh and so forth. Reticulated or slatted (i.e. apertured) fence panels are generally preferred because they reduce wind loading (compared with solid or continuous fence panels) on the fence posts.

Fence posts also come in a wide variety of forms, but the most commonplace fence posts comprise upright metal tubes or concrete/wooden posts that are anchored into the ground. To install a fence post, one typically excavates a hole in the ground, inserts the lower end of the fence post into the hole, and then backfills the hole with earth, or in most cases; a pourable, setting material, such as concrete (or, in certain applications, water that freezes to form an ice anchorage around the base of the fence post). Once installed, the fence posts provide a support structure to which fence panels can be affixed. Nevertheless, excavation and backfilling can be expensive and time-consuming operations.

Whilst fences are generally quicker and less expensive to install than walls, in situations where a boundary is needed quickly, for example in a military installation, it is known to use gabion walls. A gabion wall is a wall made from a number of gabions placed side-by-side and/or on top of each other. A gabion generally comprises a self-supporting mesh cage that can be placed directly onto the ground and filled with whatever backfill material may be available (e.g. sand, earth, ice, rocks etc.). Gabions can be installed relatively easily, using manpower alone (i.e. backfilling using shovels) as single-height units. However, where a higher gabion wall needs to be constructed, that is to say, by stacking one row of gabions on top of another, this can be labour intensive and risky.

Therefore, where a "stacked" gabion wall is required, it is usually necessary to use plant or other earth-moving machinery to backfill the elevated gabions. Even with plant on-hand, gabions can only be stacked to a height at which the compressive strength (i.e. burst resistance) of the lowermost gabions sidewalls is not exceeded. This will, of course, vary depending on the nature and density of the backfill material, but it is unusual to see gabion walls that are more than three gabions high, i.e. greater than 3m high.

A further drawback of gabion walls is that they are obtrusive structures, and, being semi-permanent structures, do not lend themselves well to subsequent movement or disassembly.

A need therefore exists for a solution to the problem of providing an anchor that is suitable for supporting a fence or another type of supplementary structure and/or which addresses or overcomes one or more of the above problems.

Aspects of the invention are set forth in the appended independent claim or claims. Optional or preferred embodiments of the invention are set forth in the appended dependent claims.

Therefore, the anchor comprises, when assembled, a generally cuboidal supporting framework lined with a connected liner. The liner can be filled, in use, with a ballast material, such as earth, rocks, sand, snow, water etc. to form a gabion-like structure forming a weighted base for a fence post. In certain embodiments, the liner is waterproof, thereby enabling water, or liquid, ballast to be used to weight-down the base. The liner may further comprise a lid or closure flap, which can be used to retain the ballast. A lid or closure flap, where provided, may usefully inhibit or prevent the loss of ballast, such as blown-away sand ballast, or the evaporation of water ballast.

By using a gabion-like structure as a support, to support a fence post for example, it obviates the need to excavate and backfill a hole in the ground for supporting a lower part of, say, a fence post. Further, as the gabion-like structure is generally placed directly onto the ground, it is possible to fill the liner manually, and/or to empty it manually to move the base. This configuration suitably makes the base relatively easy to install, remove or move, when needed.

Further, as the base is used to support a fence post and may be further a supplementary structure affixable thereto, the height of a fence or structure installed using the invention is not necessarily restricted to the height or other properties of the anchor. In other words, it is not necessary to stack gabions to form a structure whose height is greater than that of a single gabion.

The supporting framework is a rigid structure formed from a set of interconnectable uprights and cross-members. The uprights and cross-members can be made from any suitable material, although square- or rectangular-section metal tubing is preferred because it facilities the formation of right angles, and is lighter than bar or rod.

The uprights and cross-members suitably interconnect using bolts and nuts, or preferably using quick-release connectors, such as anti-luce latches.

In certain embodiments, the supporting framework comprises a pair of substantially parallel rectangular-section tubes that form feet for the support frame, which rest, in use, on a ground surface. The feet suitably comprise uprights at, or near to their opposite ends, and cross-braces are suitably provided as well to maintain the uprights in a rigid, parallel, spaced-apart configuration. The feet, uprights and cross-braces together form side walls of the supporting framework, and the side walls can be braced by interconnecting members to form the generally cuboidal hollow interior of the supporting framework.

Disconnection of the elements making up the supporting framework enables it to be collapsed or significantly reduced in size. This permits the collapsed or disassembled supporting framework to fit inside the liner, when not in use.

The liner has an open-topped, generally cuboidal form and is shaped and dimensioned to fit inside the assembled supporting framework. The liner further comprises connectors disposed on, or about, an upper peripheral edge of the open top of the liner, which connectors are adapted, in use, to connect an upper part of the liner to an upper part of the assembled supporting framework.

The liner suitably comprises a loop at each of its upper corners, which loops are able to fit over an upper part of an upright of the supporting framework. Suitably, therefore, the supporting framework comprises an upright at each corner, which projects above the level of a cross-brace or cross-member of the supporting framework. Thus, when the liner's loops are placed over the ends of the uprights, they are prevented from sliding down the uprights by engagement with one or more cross-braces or cross members. Additionally or alternatively, the supporting framework may comprise a plurality of hooks adapted, in use, to engage with corresponding loops of the liner. By such means, an upper peripheral edge of the open top of the liner can be connected to an upper part of the assembled supporting framework. Therefore, when the liner is filled with ballast, the liner is fixed to the supporting framework and does not significantly slide down relative thereto.

In other embodiments of the invention, other types of connectors could be used, for example, hook-and-loop tapes, twisted wire, karabiners, adhesive tape, etc..

The anchor described herein can be adapted for supporting a fence post, in use. Preferably, therefore, the supporting framework comprises one or more connectors for connecting the supporting framework to a fence post. In one embodiment of the invention, the fence post comprises a generally square- or rectangular-sectioned metal tube that is connected at, or towards, its lower end, to the supporting framework. This can be accomplished in a variety of ways, but in certain embodiments, the connection of the supporting framework to the fence post is achieved by way of a pivot joint and an abutment joint: the fence post being connectable to the anchor via the pivot joint in a first orientation (e.g. substantially horizontal) and being pivotable, about the pivot joint, until another part of the fence post engages with the abutment joint. By such means, the fence post can be offered up to the anchor from a safe working height (e.g. at waist height), and substantially horizontally, and then pivoted to an upright orientation and locked in position by the locking joint.

In other embodiments of the invention, the connection between the anchor and the fence post is by way of a clevis arrangement or by way of one or more D-ring members of the support frame into which a lower end of the fence post can be inserted.

The fence post, or supplementary structure affixable to the anchor, is suitably collapsible. This can be accomplished by forming the fence post or supplementary structure as a set of interconnectable tubes, which can be assembled on site to form an elongate fence post, but which (in preferred embodiments of the invention) can be broken-down into relatively shorter parts, which may usefully fit inside the liner, when the anchor is not in use. By being able to pack-down the fence post into the liner in this way, transportation and storage of the system, when not in use, is greatly facilitated.

A fence constructed in accordance with the invention may further comprise a fence panel, which fence panel is connected to the fence posts to form the fence. In certain embodiments of the invention, but not all embodiments, the fence panels are made up from a set of interconnectable fence panel portions made from wire mesh. The fence panel portions, in certain embodiments, are shaped and dimensioned to as to fit inside the liner (along with the collapsed supporting framework and/or the collapsed fence post), when not in use.

It will be appreciated that a fencing system in accordance with the invention could be made up of a number of units each comprising an anchor, fence post and a fence panel. As a fence would be made up from a number of like repeating units (anchor, fence post & fence panel), it may be highly preferred, in certain embodiments, to make the supporting framework, the fence post and the fence panel fit inside the liner, when not in use.

To facilitate transportation of the anchor, either when empty or weighted down with ballast, one or more hoisting eyes may be provided on the supporting framework. Suitably, the hoisting eyes are connected to a lower part of the supporting framework (e.g. the feet described above) so that the weight of any ballast within the liner is supported from beneath by the supporting framework, rather than indirectly, via the connectors.

Embodiments of the invention shall now be described, by way of example only, with reference to the accompanying drawings in which:
Figure 1 is a perspective view of an erected fence formed using a series of anchors in accordance with the invention;
Figure 2 is a perspective view of an anchor as shown in Figure 1 in a collapsed state, ready for transport and/or storage;
Figure 3 is a perspective view of the anchor of Figure 2 in a partially assembled state;
Figure 4 is a perspective view of the anchor of Figure 3 in an assembled state;
Figure 5 is a perspective view of the anchor of Figure 4 in an assembled and filled state;
Figure 6 is a schematic side view showing how the fence of Figure 1 can be erected using anchors of Figures 2 to 5;
Figure 7 is a schematic side view of the fence of Figure 1;
Figure 8 is a perspective view of an anchor in accordance with the invention suitable for supporting a supplementary support structure;
Figure 9, 10 and 11 are perspective views of solar PV arrays supported on anchors as shown in Figure 8;
Figure 12 is a perspective view of a watchtower constructed from a number of anchors in accordance with the invention;
Figure 13 is a perspective view of a storage facility constructed from a number of anchors in accordance with the invention; and
Figure 14 is a perspective view of a gabion wall constructed from a number of anchors in accordance with the invention.

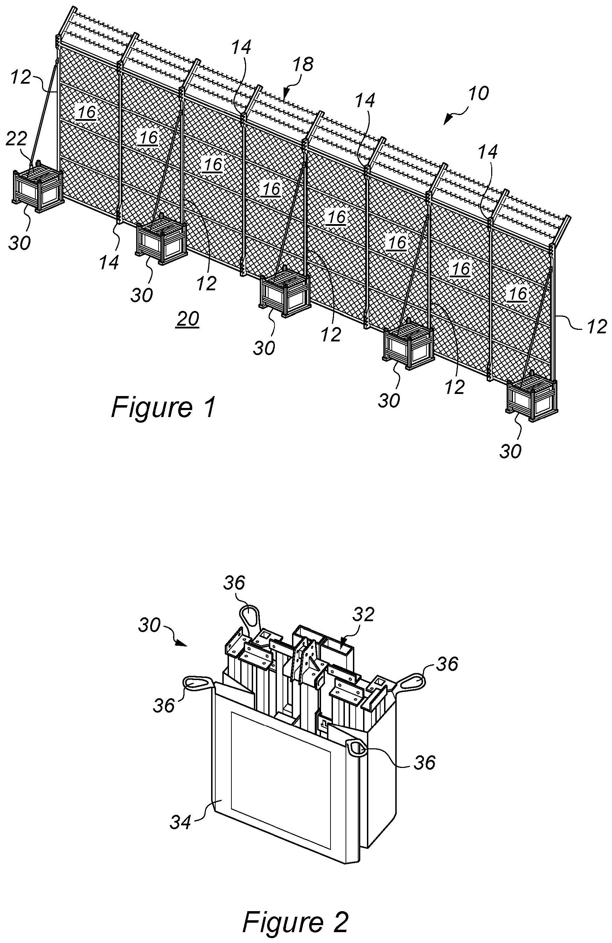

Referring to Figure 1 of the drawings, a modular fence 10 is formed from a series of spaced apart anchors 30 that support a corresponding set of upright fence posts 12. Attached to, and supported by, the fence posts 12, and by a set of intermediate fence posts 14, are a series of wire mesh fence panels 16. The fence 10 is topped by an anti-climb-over system 18 affixed to, and supported by the fence posts. The anchors 30 are placed directly onto the ground 20 and are weighted down by ballast 22 placed into them. The fence 10 therefore overcomes many of the problems associated with existing fence systems (by removing the need to excavate and backfill holes in the ground for the lower ends of the fence posts) and existing gabion walls (by enabling a relatively high boundary to be formed without having to stack gabions on top of one another.

In detail, and with reference to Figures 2 to 5 of the drawings, each anchor 30 comprises a supporting framework 32 and a liner 34. As can be seen in Figure 2, then the anchor 30 is not in use, the supporting framework 32 can be disassembled and stored inside the liner 34. The liner 34 has a strong loop 36 attached to each of its upper corners, which facilitates transportation of the anchor 30. The liner 34, as shown in Figure 2, even with the collapsed supporting framework 32 inside it, has some spare space/capacity, which, in certain embodiments, can be used to store any one or more of: a broken-down fence post 12, a broken-down intermediate fence post 14; a broken-down fence panel 16; a broken-down anti-climb-over system 18; and a supplementary supporting framework, as shall be described below.

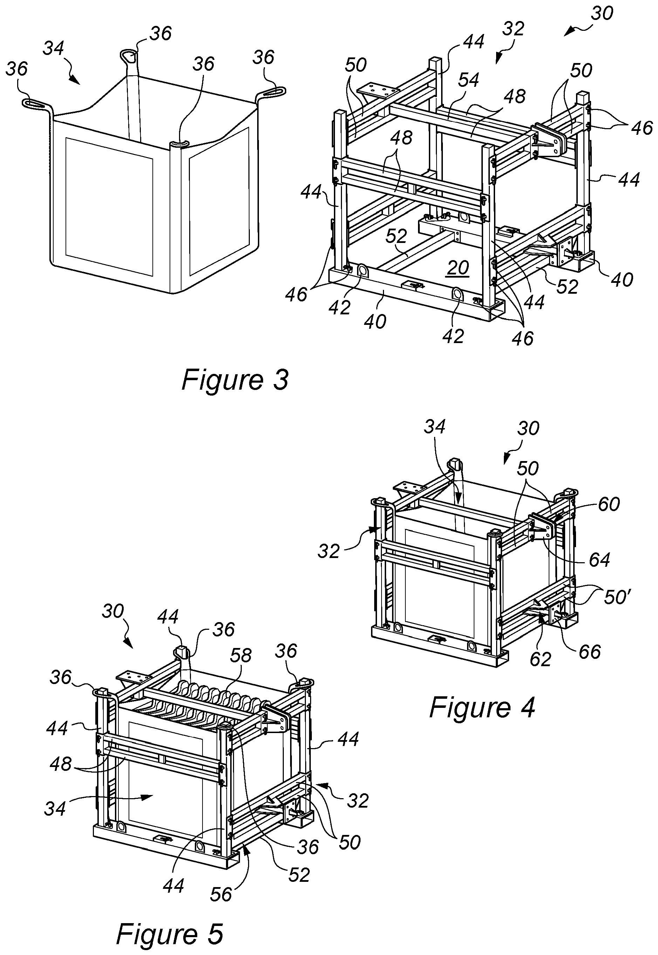

To erect the fence 10, as shown by the sequence of Figures 3 to 5, the supporting framework 32 is taken out of the liner 34 and assembled, as shown in Figure 3.

The supporting framework 32 comprises a set of feet 40 formed by rectangular cross-section tubes, which rest on the ground 20, in use. The feet 40 have lifting eyes 42 connected thereto, to facilitate lifting the anchor 30 using lifting equipment, such as a crane.

Four upright, square cross-section tubes 44 are releasably connected, via anti-luce latches 46, one to each end of, the two feet 40, and these uprights 44 define the vertical edges of the supporting framework 32. The uprights 44 are detachably interconnected by cross-braces 48, which are secured to the uprights 44 by anti-luce latches 46 also. A further set of cross-members 50, at right angles to the cross-braces 48, are provided, which also connect to the uprights 44 using anti-luce latches 46. The feet 40 are also cross-braced by a further set of struts 52, and the cross-members are cross-braced centrally by a connector tube 54. The struts 52 and the connector tube 54 are releasably connected to the supporting framework by further anti-luce latches 46. The supporting framework 32 can thus be assembled from a set of components to form a rigid, generally cuboidal framework; or disassembled into its constituent parts to pack-down into the liner 34.

Anti-luce latches are particularly advantageous in certain environments where bolts and nuts are contraindicated. For example, in cold, icy environments, where gloved-finger dexterity may be restricted, the use of anti-luce connectors is vastly preferred over bolts and nuts, say, as they are more easily manipulated, and do not require the use of tools, compared with other connection methods. Further, in desert environments, a dropped nut can often be impossible to find if it sinks into the sand. By using anti-luce latches, as opposed to, say bolts and nuts, the risk of losing a critical part of the system is vastly reduced.

Referring now to Figure 4 of the drawings, the liner 34 has been inserted into the supporting framework 32 and its connector loops 36 have been placed over the upper ends of the vertical tubes 44. Thus, the liner 34 is suspended within the supporting framework 32 by its connector loops 36, and at the same time, its lower surface 56 rests on the struts 52 previously described.

In Figure 5 it can be seen how the liner 34 has been filled with ballast 58, in this example, by sand, and outward bulging of the liner 34, under the weight/pressure of the ballast 58 is resisted by the cross-members 48, 50.

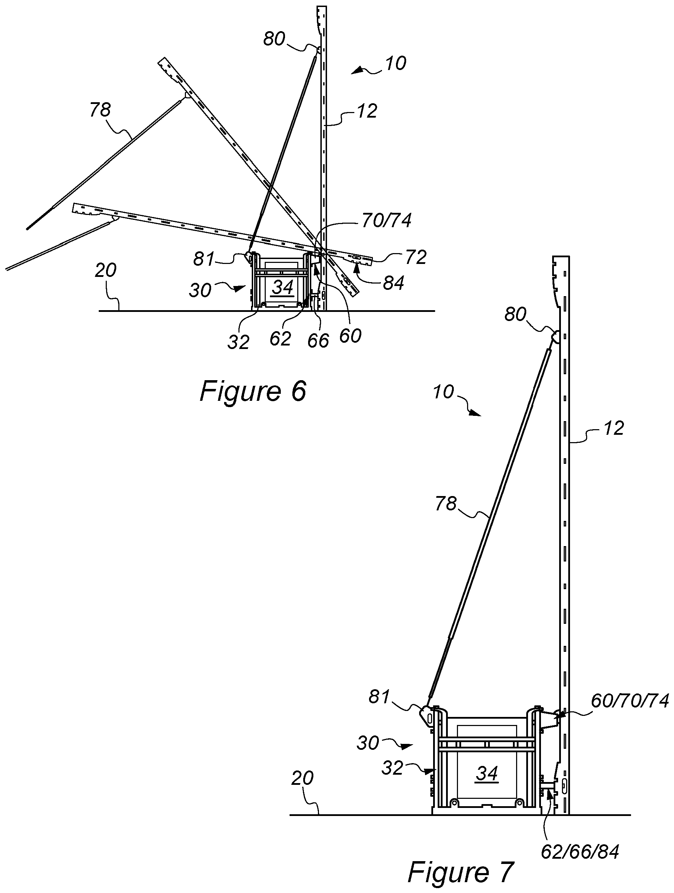

Referring to Figures 3, 4 and 5 of the drawings, in particular, to Figure 4, it can be seen that the supporting framework 32 has a pivot connector 60 and an abutment connector 62 affixed to upper 50 and lower 50' cross-members, respectively. The pivot connector 60 comprises a through hole 64 for receipt of a pintle bar (not shown) about which a fence post 12 can pivot. The abutment connector 62 comprises a protrusion 66, which engages a corresponding aperture in the fence post 12 to lock it in position, as shown in Figures 6 and 7 of the drawings.

Referring to Figures 6 & 7 of the drawings, the anchor 30 is used to support a fence post 12 formed from tubular steel, which as a through hole 70 approximately 1m above its lower end 72, which through hole receives a pintle bar 74 that passes through the through hole 64 in the pivot connector 60 of the anchor 30 previously described. As can be seen from Figure 6, the fence post 12 is initially laid approximately level on top of the supporting framework 32 of the anchor 30 and is connected to the pivot connector 60 using the pintle bar 74. The fence post 12 can then be raised to a vertical position, as shown in Figure 7, by pushing on a brace strut 78, which is pivotally connected at its upper end 80 to the fence post 12. When the fence post 12 has been moved to a vertical position, the lower end 81 of the brace strut 78 can be connected to the anchor 30 via the connector tube 54. Thus, the fence post 12, connector tube 54 and brace strut 78 form a rigid, triangulated structure, to hold the fence post 12 upright and affixed to the anchor 30. To stabilise the fence post 12 laterally relative to the anchor 30, an aperture 84 is provided in a lower part of the fence post, which engages with the protrusion 66 of the abutment connector 62 previously described. The aperture 84 is held in engagement with the protrusion 66 by the action of the brace strut 78, which urges top of the fence post 12 forward, thus urging the aperture 84 into engagement with the protrusion.

A fence 10 can be assembled by placing a series of anchors 30 as described above on the ground 20 and by installing the fence posts 12 as previously described. Fence panels 16 and/or intermediate fence posts 14 can be added, as well as an anti-climb-over device 18, as required (either with the fence posts 12 in the flat or vertical position).

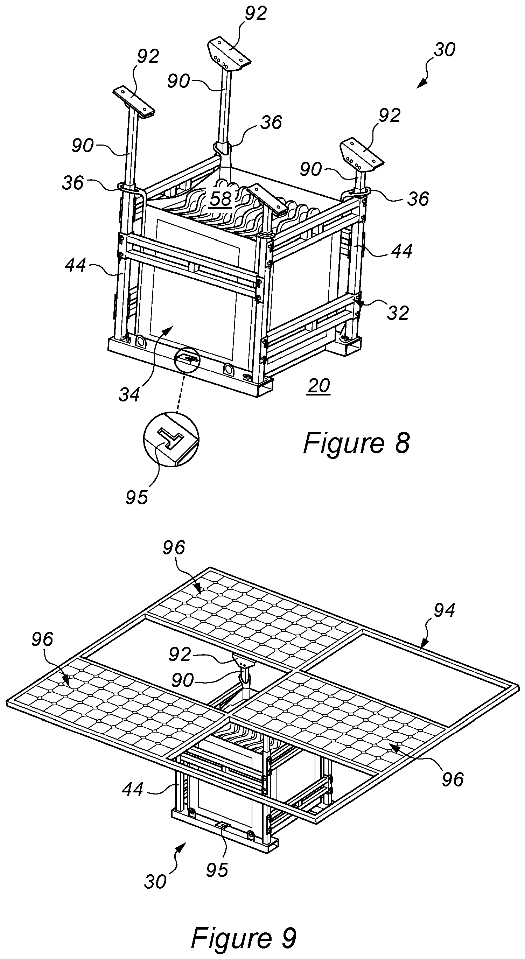

Other uses of the anchor 30 are manifold, but further applications are described hereinbelow with reference to Figures 8 to 14 of the drawings.

Referring to Figures 8 to 11 of the drawings, the anchor 30 is used as a support for a solar panel array. In Figure 8 it can be seen that the anchor 30 is a slightly simplified version of that described previously insofar as the central connector tube 54, pivot connector 60 and the abutment connector 62 have been omitted. In this example, the anchor 30 is fitted with a set of vertical extension tubes 90, which slide into the open ends of the vertical support tubes 44 of the supporting framework. The upper ends of the extension tubes 90 are fitted with flanges 92, to which a supplementary supporting framework 94, as shown in Figures 9, 10 and 11 can be fitted.

The relative lengths of the extension tubes 90 can be varied to adjust the orientation of the supplementary supporting framework 94, and this can be facilitated by checking the level of the anchor 30 using a built-in spirit level 95, as shown in Figure 8.

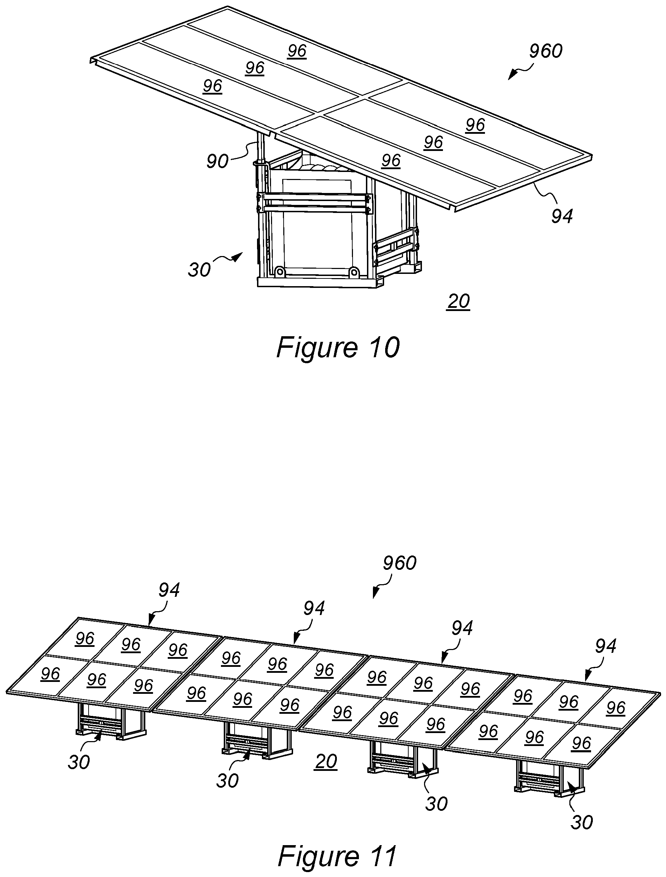

Referring now to Figure 9 of the drawings, the supplementary supporting framework 94 comprises a reticulated structure made from steel tubing, which is adapted to receive solar PV panels 96 of a convention type. In Figure 9, three of the six solar panels 96 have been omitted for clarity, but it will be appreciated that the inclination of the supplementary supporting framework 94 and the solar PC panels 96 can be adjusted to suit by adjustment of the extension tubes 90 relative to the uprights 44 of the anchor's supporting framework 32 (as can be seen by comparing Figure 9 and 10).

Figure 11 shows how a large solar PV array 960 can be formed by placing several anchors 30 on the ground 20 in a desired pattern, affixing their respective supplementary supporting frameworks 94 and also a set of solar PV panels 96.

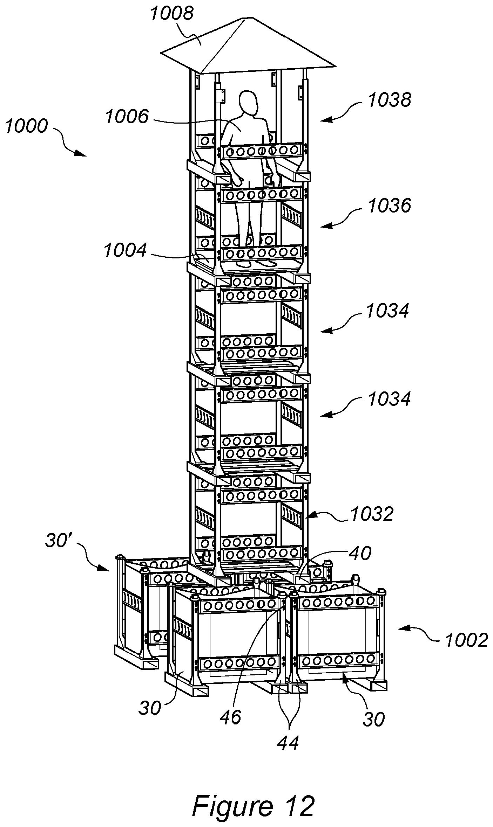

In Figure 12 of the drawings, four anchors 30, as described above, are used to form the base of a watchtower assembly 1000. A first two of the anchors 30 are interconnected using anti-luce latches 46, which connect the uprights 44 of adjacent anchors 30 to one another. As second pair of anchors 30' are similarly connected, but are spaced apart slightly from the first pair to create a generally rectangular base 1002 for the watchtower 1000.

A first anchor frame 1032 (i.e. an anchor 30, but without its liner 34) is placed one on top of the base 1002. It will be noted that the spacing between the cross-bracing connector tubes 54 of each pair of interconnected anchors 30 is roughly the same as the spacing of the feet 40 of the first anchor frame 1032, and so the latter can be stably placed, and connected to, the former: again using anti-luce latches, or other suitable releasable or permanent connectors.

Further anchor frames 1034 (i.e. anchors 30, but without their liners 34) are placed one on top of each other, on top of the first anchor frame 1032, and suitably interconnected, to form the tower structure 1000. A standing platform 1004 can be placed in the base of the second-to-top anchor frame 1036, for a person 1006 to stand upon, and a roof 1008 can be supported on atop the upper support frame 1038 to provide shelter for that person, in use, if required.

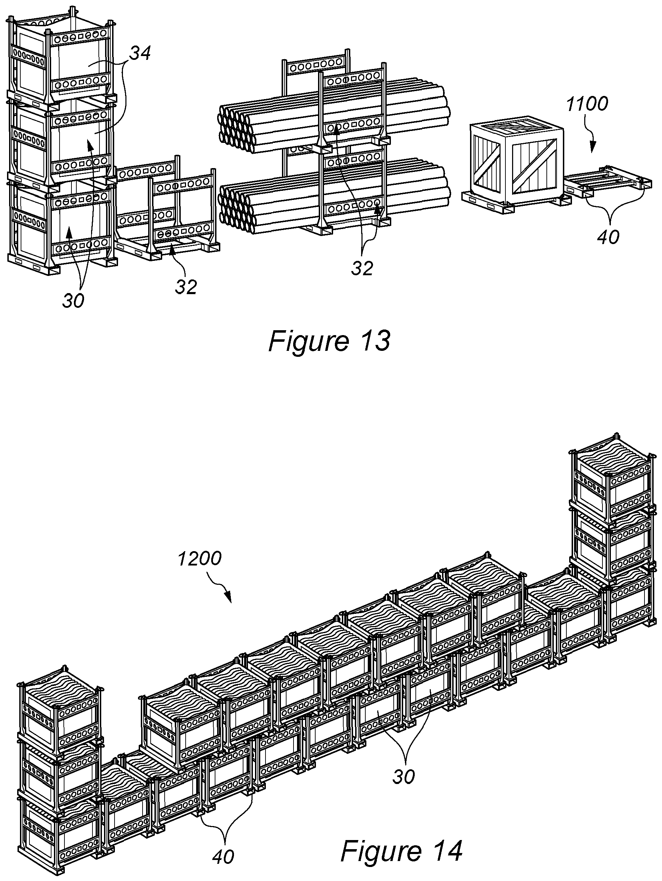

Referring to Figure 13 of the drawings, the anchors 30 previously described, can be used with, or without their liners 34 to form a modular storage system, either as racking (without liners 34) or as frames 32 alone to form storage bins. In certain cases, the support frames 32 can be stripped down to form pallets 1100, the feet 40 of which conveniently providing fork-lift hoist points.

Finally, as shown in Figure 14 of the drawings, the anchors 30 can be stacked one on top of another, or in a staggered fashion (as described previously) to form a gabion wall 1200. However, the invention has the advantage over a traditional gabion wall insofar as, because each support frame 32 has tubular feet 40 and crane-hoisting points 42, it is possible, if necessary, to relocate the filled gabions, for example, suing a fork-lift truck or crane. A traditional gabion by contrast, which only has a wire cage support structure, cannot be (so easily, if at all) moved once filled.

The invention is not restricted to the details of the foregoing embodiments, which are merely exemplary of the invention. For example, the anchor could be used in other applications besides fencing and/or solar PV arrays; any materials or dimensions (whether express or implied) could be varied etc., without departing from the scope of the invention, which is set forth in the appended claims.

## Claims

1. An anchor (30) comprising: a supporting framework (32); and a liner (34),
the supporting framework (32) being:
a rigid structure formed from a set of feet (40), which rest, in use, on the ground or a support surface, a set of struts (52) cross-bracing the feet (40), a set of interconnected, tubular metal uprights (44) defining the vertical edges of the supporting framework, a set of cross-braces interconnecting a first set of the uprights and cross-members (48, 50) at right angles to the cross-braces interconnecting a second set of uprights, that together define a generally cuboidal hollow interior portion of the supporting framework (32); and the supporting framework being collapsible, when not in use, to fit within the liner (34),
the liner (34) having an open-topped, generally cuboidal form and being shaped and dimensioned to fit inside the assembled supporting framework and being:
receivable within the supporting framework (32); and
comprising connectors (36) disposed on, or about, an upper peripheral edge thereof, which connectors are adapted, in use, to connect an upper part of the liner (34) to an upper part of the assembled supporting framework (32), such that the liner (43) is suspended within the supporting framework (32) by its connectors (36) with its lower surface resting on the struts (52) cross-bracing the feet (40);
wherein the anchor further comprising a fence post (12); and
the supporting framework (32) further comprises one or more connectors (60, 62) for connecting the supporting framework (32) to the fence post (12).

2. The anchor (30) of claim 1, wherein the connectors (36) disposed on, or about, an upper peripheral edge of the liner (34) comprise any one or more of the group comprising: loops(36); hook-and-loop tapes; twisted wire; and karabiners that hook over the tubular uprights (44) of the supporting framework (32).

3. The anchor (30) of claim 1 or 2, further comprising a connector tube (54) cross-bracing the cross-members (48, 50).

4. The anchor (30) of any preceding claim, wherein the interconnected uprights (44) and cross-members (50), or any one or more of the cross-braces (48), struts (52) and connector tube (54), are detachably interconnected using quick-release connectors (46).

5. The anchor (30) of claim 4, wherein the quick-release connectors comprise anti-luce latches (46).

6. The anchor (30) of any preceding claim, wherein the tubular feet (40) are configured so as to form spaced-apart lifting points for receiving, in use, the forks of a fork-lift truck, and wherein the supporting framework (32) comprises one or more hoisting eyes (42) connected to a lower part of the supporting framework (32).

7. The anchor (30) of any preceding claim, wherein the liner (34) is waterproof and comprises a lid or closure flap.

8. The anchor (30) of any preceding claim, wherein the one more connectors (60, 62) for connecting the supporting framework (32) to the fence post (12) comprises a pivot joint (64) and an abutment joint (62), the fence post (12) comprising a generally square- or rectangular-sectioned metal tube and being connected to the supporting framework (32) at a lower end thereof by the pivot joint (64) and the abutment joint (62).

9. The anchor (30) of claim 8, wherein the pivot connector (60) and the abutment connector (62) are affixed to upper (50) and lower (50') cross-members, respectively.

10. The anchor (30) of claim 8 or claim 9, wherein the fence post (12) is connectable to the anchor (30) via the pivot joint (64) in a first orientation and is pivotable, about the pivot joint (64), to a second position in which another part of the fence post (12) engages with the abutment joint (62).

11. The anchor (30) of claim 10, further comprising a brace strut (78), which is pivotally connected (80) at its upper end to the fence post (12) and when the fence post (12) has been moved to the second position, the lower end of the brace strut (78) is connectable (81) to the anchor (30) via the connector tube (54).

12. The anchor (30) of any preceding claim, wherein the one or more connectors (60, 62) for connecting the supporting framework (32) to the fence post (12) comprises any one or more of the group comprising: a clevis arrangement; and one or more D-ring members of the support frame (32) into which a lower end of the fence post (12) can be inserted.

13. The anchor of any preceding claim, further comprising a supplementary support structure (90, 92, 94) affixable to the anchor, the supplementary support structure (90, 92, 94) being collapsible.

14. The anchor (30) of claim 13, wherein the fence post (12) or supplementary structure (90, 92, 94) comprises a set of interconnectable tubes, which can be broken-down into relatively shorter parts, which fit inside the liner (34), when the anchor (30) is not in use.

15. A fence (10) comprising a plurality of anchors (30) according to any preceding claim, and a fence panel connectable to one or more of the fence posts (12) to form the fence (10).

16. The fence (10) of claim 15, wherein the fence panel comprises a set of interconnectable fence panel portions, which are shaped and dimensioned so as to fit inside the liner (34) when not in use and optionally further comprising an anti-climb-over system.

17. A support (960) for a solar panel array (96) comprising one or more anchors (90) according to claim 13, and further comprising set of vertical extension tubes (90), which slide into the open ends of the uprights (44) of the supporting framework (32), the upper ends of the extension tubes (90) comprising flanges (92) to which the supplementary supporting framework (94) is affixable.

18. The support (960) of claim 17, wherein the relative lengths of the extension tubes (90) are adjustable, to adjust the orientation of the supplementary supporting framework (94).

19. The support (960) of claim 17 or claim 18, wherein the supplementary supporting framework comprises a reticulated structure made from steel tubing adapted, in use, to support one or more photovoltaic panels (96), the support (960) further comprising a photovoltaic panel (96).

20. A watchtower assembly (1000) comprising a base (1002) formed from a plurality of anchors (30) according to claim 1, the base being formed by interconnecting two or more of the said anchors, and further comprising one or more supporting frameworks (1034, 1036) placed on top of the base (1002) and further comprising any one or more of the group comprising: a standing platform (1004) affixed, in use, to the base of one of the supporting frameworks (1036); a roof (1008) supported by an upper supporting framework of the stack of supporting frameworks (1036).

## Patentansprüche

1. Anker (30), der Folgendes umfasst: ein Traggerüst (32); und eine Auskleidung (34),
wobei es sich bei dem Traggerüst (32) um Folgendes handelt:
eine starre Konstruktion, die aus Folgendem gebildet ist: einem Satz Füße (40), die im Einsatz auf dem Boden oder einer Auflagefläche stehen, einem Satz Steifen (52), die die Füße (40) quer verstreben, einen Satz miteinander verbundener rohrförmiger Metallpfosten (44), die die vertikalen Kanten des Traggerüsts definieren, wobei ein Satz Querstreben einen ersten Satz der Pfosten miteinander verbindet und zu den Querstreben im rechten Winkel liegende Querträger (48, 50) einen zweiten Satz Pfosten miteinander verbinden, die zusammen einen allgemein quaderförmigen hohlen inneren Abschnitt des Traggerüsts (32) definieren; und wobei das Traggerüst, wenn es nicht im Einsatz ist, zusammenklappbar ist, um in die Auskleidung (34) hineinzupassen,
wobei die Auskleidung (34) eine allgemein quaderförmige Form mit offener Oberseite aufweist und geformt und bemessen ist, um in das zusammengebaute Traggerüst hineinzupassen und:
in dem Traggerüst (32) aufgenommen werden kann; und
Verbinder (36) umfasst, die an oder bei einer oberen Umfangskante derselben angeordnet sind, wobei die Verbinder dazu angepasst sind, im Einsatz einen oberen Teil der Auskleidung (34) mit einem oberen Teil des zusammengebauten Traggerüsts (32) zu verbinden, sodass die Auskleidung (43) an den Verbindern (36) in dem Traggerüst (32) aufgehängt ist, wobei ihre untere Oberfläche auf den die Füße (40) quer verstrebenden Steifen (52) aufliegt;
wobei der Anker weiter einen Zaunpfahl (12) umfasst; und
das Traggerüst (32) weiter einen oder mehrere Verbinder (60, 62) umfasst, um das Traggerüst (32) mit dem Zaunpfahl (12) zu verbinden.

2. Anker (30) nach Anspruch 1, wobei die Verbinder (36), die an oder bei einer oberen Umfangskante der Auskleidung (34) angeordnet sind, eines oder mehrere der Folgendes umfassenden Gruppe umfassen: Schlaufen (36); Klettverschlussbänder; verdrillten Draht; und Karabiner, die über die rohrförmigen Pfosten (44) des Traggerüsts (32) haken.

3. Anker (30) nach Anspruch 1 oder Anspruch 2, weiter umfassend ein Verbindungsrohr (54), das die Querträger (48, 50) quer verstrebt.

4. Anker (30) nach einem der vorangehenden Ansprüche, wobei die miteinander verbundenen Pfosten (44) und Querträger (50) oder eine/r oder mehrere der Querstreben (48), der Steifen (52) und des Verbindungsrohrs (54) unter Verwendung von Schnelllöseverbindern (46) lösbar miteinander verbunden sind.

5. Anker (30) nach Anspruch 4, wobei die Schnelllöseverbinder Anti-Luce-Verschlüsse (46) umfassen.

6. Anker (30) nach einem der vorangehenden Ansprüche, wobei die rohrförmigen Füße (40) konfiguriert sind, um voneinander beabstandete Hebepunkte zu bilden, um im Einsatz die Gabeln eines Gabelstaplers aufzunehmen, und wobei das Traggerüst (32) eine oder mehrere Hebeösen (42) umfasst, die mit einem unteren Teil des Traggerüsts (32) verbunden sind.

7. Anker (30) nach einem der vorangehenden Ansprüche, wobei die Auskleidung (34) wasserdicht ist und einen Deckel oder eine Verschlussklappe umfasst.

8. Anker (30) nach einem der vorangehenden Ansprüche, wobei der eine oder mehrere Verbinder (60, 62) zum Verbinden des Traggerüsts (32) mit dem Zaunpfahl (12) eine Gelenkverbindung (64) und eine Widerlagerverbindung (62) umfasst, wobei der Zaunpfahl (12) ein Metallrohr mit allgemein quadratischem oder rechteckigem Querschnitt umfasst und an einem unteren Ende desselben durch die Gelenkverbindung (64) und die Widerlagerverbindung (62) mit dem Traggerüst (32) verbunden ist.

9. Anker (30) nach Anspruch 8, wobei der Gelenkverbinder (60) und der Widerlagerverbinder (62) an einem oberen (50) bzw. einem unteren (50') Querträger befestigt sind.

10. Anker (30) nach Anspruch 8 oder Anspruch 9, wobei der Zaunpfahl (12) über die Gelenkverbindung (64) in einer ersten Ausrichtung mit dem Anker (30) verbunden werden kann und um die Gelenkverbindung (64) in eine zweite Stellung geklappt werden kann, in der ein anderer Teil des Zaunpfahls (12) mit der Widerlagerverbindung (62) in Eingriff gelangt.

11. Anker (30) nach Anspruch 10, weiter umfassend eine Verstrebungssteife (78), die an ihrem oberen Ende mit dem Zaunpfahl (12) gelenkig verbunden (80) ist, und wobei, wenn der Zaunpfahl (12) in die zweite Stellung bewegt wurde, das untere Ende der Verstrebungssteife (78) über das Verbindungsrohr (54) mit dem Anker (30) verbunden (81) werden kann.

12. Anker (30) nach einem der vorangehenden Ansprüche, wobei der eine oder die mehreren Verbinder (60, 62) zum Verbinden des Traggerüsts (32) mit dem Zaunpfahl (12) eines oder mehrere der Folgendes umfassenden Gruppe umfassen: eine Lastbügelanordnung; und ein oder mehrere D-Ringelemente des Traggerüsts (32), in die ein unteres Ende des Zaunpfahls (12) eingesetzt werden kann.

13. Anker nach einem der vorangehenden Ansprüche, weiter umfassend eine Zusatztragkonstruktion (90, 92, 94), die an dem Anker befestigt werden kann, wobei die Zusatztragkonstruktion (90, 92, 94) zusammenklappbar ist.

14. Anker (30) nach Anspruch 13, wobei der Zaunpfahl (12) oder die Zusatzkonstruktion (90, 92, 94) einen Satz miteinander verbindbarer Rohre umfasst, die in relativ kürzere Teile zerlegt werden können, die in die Auskleidung (34) hineinpassen, wenn der Anker (30) nicht im Einsatz ist.

15. Zaun (10), umfassend eine Vielzahl von Ankern (30) nach einem der vorangehenden Ansprüche und ein Zaunfeld, das mit einem oder mehreren der Zaunpfähle (12) verbunden werden kann, um den Zaun (10) zu bilden.

16. Zaun (10) nach Anspruch 15, wobei das Zaunfeld einen Satz miteinander verbindbarer Zaunfeldabschnitte umfasst, die geformt und bemessen sind, um in die Auskleidung (34) hineinzupassen, wenn sie nicht im Einsatz sind, und die optional weiter ein Übersteigsicherungssystem umfassen.

17. Halterung (960) für eine Solarpaneelgruppe (96), umfassend einen oder mehrere Anker (90) nach Anspruch 13 und weiter umfassend einen Satz vertikaler Verlängerungsrohre (90), die in die offenen Enden der Pfosten (44) des Traggerüsts (32) gleiten, wobei die oberen Enden der Verlängerungsrohre (90) Flansche (92) umfassen, an denen das Zusatztraggerüst (94) befestigt werden kann.

18. Halterung (960) nach Anspruch 17, wobei die relativen Längen der Verlängerungsrohre (90) verstellbar sind, um die Ausrichtung des Zusatztraggerüsts (94) zu verstellen.

19. Halterung (960) nach Anspruch 17 oder Anspruch 18, wobei das Zusatztraggerüst eine aus Stahlrohren hergestellte netzartige Konstruktion umfasst, die dazu angepasst ist, im Einsatz ein oder mehrere Photovoltaikpaneele (96) zu halten, wobei die Halterung (960) weiter ein Photovoltaikpaneel (96) umfasst.

20. Wachturmanordnung (1000), umfassend eine Basis (1002), der aus einer Vielzahl von Ankern (30) nach Anspruch 1 gebildet ist, wobei die Basis gebildet wird, indem zwei oder mehr der Anker miteinander verbunden werden, und weiter umfassend ein oder mehrere auf die Basis (1002) platzierte Traggerüste (1034, 1036) und weiter umfassend eines oder mehrere der Folgendes umfassenden Gruppe: eine Standplattform (1004), die im Einsatz an der Basis eines der Traggerüste (1036) befestigt ist; ein Dach (1008), das von einem oberen Traggerüst des Stapels von Traggerüsten (1036) getragen wird.

## Revendications

1. Ancrage (30) comprenant : une ossature de support (32) ; et une enveloppe (34),
l'ossature de support (32) étant :
une structure rigide formée à partir d'un ensemble de pieds (40) qui reposent, en utilisation, au sol ou sur une surface de support, d'un ensemble de jambes de force (52) reliant en croisillonnement transversal les pieds (40), d'un ensemble de montants métalliques tubulaires raccordés entre eux (44) définissant les bords verticaux de l'ossature de support, d'un ensemble de traverses de croisillonnement raccordant entre eux un premier ensemble des montants et des éléments de traverses (48, 50) selon des angles droits aux traverses de croisillonnement raccordant entre eux un deuxième ensemble de montants, qui définissent ensemble une partie intérieure creuse généralement cuboïde de l'ossature de support (32) ; et l'ossature de support étant escamotable, lorsqu'elle n'est pas en utilisation, pour s'adapter dans l'enveloppe (34),
l'enveloppe (34) ayant une forme généralement cuboïde à sommet ouvert et étant mise en forme et dimensionnée pour s'adapter à l'intérieur de l'ossature de support assemblée et étant :
recevable dans l'ossature de support (32) ; et
comprenant des raccords (36) disposés sur ou autour d'un bord périphérique supérieur de celle-ci, lesquels raccords sont adaptés, en utilisation, pour raccorder une partie supérieure de l'enveloppe (34) à une partie supérieure de l'ossature de support (32) assemblée, de sorte que l'enveloppe (43) soit suspendue au sein de l'ossature de support (32) par ses raccords (36) avec sa surface inférieure reposant sur les jambes de force (52) reliant en croisillonnement transversal les pieds (40) ;
l'ancrage comprenant en outre un piquet de clôture (12) ; et
l'ossature de support (32) comprenant en outre au moins un raccord (60, 62) destiné à raccorder l'ossature de support (32) au piquet de clôture (12).

2. Ancrage (30) selon la revendication 1, dans lequel les raccords (36) disposés sur ou autour d'un bord périphérique supérieur de l'enveloppe (34) comprennent au moins l'un quelconque du groupe comprenant : des boucles (36) ; des bandes à crochets et à boucles ; du fil torsadé ; et des mousquetons qui s'accrochent sur les montants tubulaires (44) de l'ossature de support (32).

3. Ancrage (30) selon la revendication 1 ou la revendication 2, comprenant en outre un tube raccord (54) reliant en croisillonnement transversal les éléments de traverses (48, 50).

4. Ancrage (30) selon l'une quelconque des revendications précédentes, dans lequel les montants (44) et éléments de traverses (50) raccordés entre eux, ou au moins l'un quelconque des traverses de croisillonnement (48), des jambes de force (52) et du tube raccord (54), sont raccordés de façon détachable à l'aide de raccords à détachement rapide (46).

5. Ancrage (30) selon la revendication 4, dans lequel les raccords à détachement rapide comprennent des fermetures anti-luce (46).

6. Ancrage (30) selon l'une quelconque des revendications précédentes, dans lequel les pieds tubulaires (40) sont conçus de façon à former des points d'élévation espacés destinés à recevoir, en utilisation, la fourche d'un chariot élévateur, et dans lequel l'ossature de support (32) comprend au moins un anneau de levage (42) raccordé à une partie inférieure de l'ossature de support (32).

7. Ancrage (30) selon l'une quelconque des revendications précédentes, dans lequel l'enveloppe (34) est étanche à l'eau et comprend un couvercle ou un volet de fermeture.

8. Ancrage (30) selon l'une quelconque des revendications précédentes, dans lequel l'au moins un raccord (60, 62) destiné à raccorder l'ossature de support (32) au piquet de clôture (12) comprend une articulation rotoïde (64) et une rivure bout à bout (62), le piquet de clôture (12) comprenant un tube métallique de section généralement carrée ou rectangulaire et étant raccordé à l'ossature de support (32) au niveau d'une extrémité inférieure de celui-ci par l'articulation rotoïde (64) et la rivure bout à bout (62).

9. Ancrage (30) selon la revendication 8, dans lequel le raccord pivot (60) et le raccord à butée (62) sont fixés à des éléments de traverses supérieur (50) et inférieur (50'), respectivement.

10. Ancrage (30) selon la revendication 8 ou la revendication 9, dans lequel le piquet de clôture (12) peut être raccordé à l'ancrage (30) par le biais de l'articulation rotoïde (64) dans une première orientation et peut pivoter, autour de l'articulation rotoïde (64), jusqu'à une deuxième position dans laquelle une autre partie du piquet de clôture (12) vient en prise avec la rivure bout à bout (62).

11. Ancrage (30) selon la revendication 10, comprenant en outre une barre de contreventement (78), qui est raccordée en pivotement (80) au niveau de son extrémité supérieure au piquet de clôture (12) et lorsque le piquet de clôture (12) a été déplacé jusqu'à la deuxième position, l'extrémité inférieure de la barre de contreventement (78) peut être raccordée (81) à l'ancrage (30) par le biais du tube raccord (54).

12. Ancrage (30) selon l'une quelconque des revendications précédentes, dans lequel l'au moins un raccord (60, 62) destiné à raccorder l'ossature de support (32) au piquet de clôture (12) comprend au moins l'un quelconque du groupe comprenant : un agencement à manille ; et au moins un élément d'anneau en boucle de l'ossature de support (32) dans lequel une extrémité inférieure du piquet de clôture (12) peut être insérée.

13. Ancrage selon l'une quelconque des revendications précédentes, comprenant en outre une structure de support complémentaire (90, 92, 94) pouvant être fixée à l'ancrage, la structure de support complémentaire (90, 92, 94) étant escamotable.

14. Ancrage (30) selon la revendication 13, dans lequel le piquet de clôture (12) ou la structure complémentaire (90, 92, 94) comprend un ensemble de tubes à raccordement mutuel, qui peuvent être décomposés en pièces relativement plus courtes, qui s'adaptent à l'intérieur de l'enveloppe (34), lorsque l'ancrage (30) n'est pas en utilisation.

15. Clôture (10) comprenant une pluralité d'ancrages (30) selon l'une quelconque des revendications précédentes et un panneau de clôture qui peut être raccordé à au moins l'un des piquets de clôture (12) pour former la clôture (10).

16. Clôture (10) selon la revendication 15, dans laquelle le panneau de clôture comprend un ensemble de parties de panneau de clôture à raccordement mutuel, qui sont mises en forme et dimensionnées de façon à s'adapter à l'intérieur de l'enveloppe (34) lorsqu'elles ne sont pas en utilisation et comprenant éventuellement en outre un système anti-franchissement.

17. Support (960) pour un réseau de panneaux solaires (96) comprenant au moins un ancrage (90) selon la revendication 13, et comprenant en outre un ensemble de tubes d'extension verticaux (90), qui glissent dans les extrémités ouvertes des montants (44) de l'ossature de support (32), les extrémités supérieures des tubes d'extension (90) comprenant des brides (92) auxquelles l'ossature de support complémentaire (94) peut être fixée.

18. Support (960) selon la revendication 17, dans lequel les longueurs relatives des tubes d'extension (90) sont réglables, pour permettre un réglage de l'orientation de l'ossature de support complémentaire (94).

19. Support (960) selon la revendication 17 ou la revendication 18, dans lequel l'ossature de support complémentaire comprend une structure réticulée constituée d'une tubulure en acier adaptée, en utilisation, pour supporter au moins un panneau photovoltaïque (96), le support (960) comprenant en outre un panneau photovoltaïque (96).

20. Ensemble de tour de surveillance (1000) comprenant une base (1002) formée à partir d'une pluralité d'ancrages (30) selon la revendication 1, la base étant formée par raccordement mutuel d'au moins deux desdits ancrages, et comprenant en outre au moins une ossature de support (1034, 1036) placée au sommet de la base (1002) et comprenant en outre au moins l'un quelconque du groupe comprenant : une plateforme de station debout (1004) fixée, en utilisation, à la base de l'une des ossatures de support (1036) ; un toit (1008) supporté par une ossature de support supérieure de l'empilement d'ossatures de support (1036).
